# EUROPÄISCHE PATENTSCHRIFT

(11) **EP 1 798 296 B1**
(45) Veröffentlichungstag und Bekanntmachung des Hinweises auf die Patenterteilung: **18.03.2009**
(21) Anmeldenummer: 06000408.2
(22) Anmeldetag: 10.01.2006
(51) Int. Cl.: C21D 1/74, C21D 1/76

(54) **Stoffliche Nutzung von Biogas**
Substancial use of biogas
Utilisation matérielle de biogaz

(30) Priorität: 15.12.2005 DE 102005060094
(43) Veröffentlichungstag der Anmeldung: 20.06.2007
(73) Patentinhaber: Linde Aktiengesellschaft, 80807 München (DE)
(72) Erfinder: Biedenkopf, Peter, 85614 Kirchseeon (DE); Häckh, Voker, 85658 Egmating (DE); Strigl, Reinhard, 80995 München (DE)
(74) Vertreter: Gellner, Bernd

(56) Entgegenhaltungen:
- DE-U- 20 319 847
- US-A- 5 443 021
- US-A1- 2005 266 540
- CHARLOTTE PLOMBIN: "Biogas as vehicle fuel" Oktober 2003 (2003-10), TRENDSETTER , STOCKHOLM , XP002374547 Gefunden im Internet: URL:www.trendsetter-europe.org/index.php?/ ID=1699> [gefunden am 2006-03-28] * Seite 3 - Seite 12 *
- KAPDI S S ET AL: "Biogas scrubbing, compression and storage: perspective and prospectus in Indian context" RENEWABLE ENERGY, PERGAMON PRESS, OXFORD, GB, Bd. 30, Nr. 8, Juli 2005 (2005-07), Seiten 1195-1202, XP004736322 ISSN: 0960-1481

## Beschreibung

Die Erfindung betrifft ein Verfahren zur Nutzung von Biogas, wobei das Biogas stofflich in einem Prozess zur Wärmebehandlung von metallischen Werkstoffen verwertet wird.

Mit Biogas bezeichnet man durch anaerobe Vergärung erzeugte Gasgemische. Die bei der Vergärung eingesetzten Stoffe können gewisse Gehalte an Fremdstoffen synthetischen Ursprungs enthalten, insbesondere solche Fremdstoffe, für deren Abtrennung derzeit keine wirtschaftlich vertretbaren Methoden ersichtlich sind.

Biogasanlagen nutzen einen anaeroben Fermentationsprozess, um aus organischen Abfällen, wie zum Beispiel Fetten, Ölen, Gülle, organischen Haushaltsabfällen oder organischen Trockensubstanzen, ein Gemisch aus Methan und Kohlendioxid herzustellen. Bei Biogasanlagen wird zwischen sogenannten Nassfermentern und Trockenfermentern unterschieden. Nassfermenter kommen vor allem in landwirtschaftlichen Betrieben zum Einsatz, während Trockenfermenter dezentral zur Reduzierung der organischen Abfallmengen genutzt werden.

Biogasanlagen werden bisher energetisch zur Stromgewinnung genutzt. Hierzu wird das entstehende Biogas in einem Gasmotor verbrannt und die erzeugte Bewegungsenergie über Generatoren in elektrischen Strom umgewandelt. Der produzierte Strom wird in das öffentliche Stromversorgungsnetz eingespeist. In Deutschland wird die Wirtschaftlichkeit von Biogasanlagen durch das "Gesetz zum Vorrang erneuerbarer Energien" gewährleistet, welches dem Betreiber einer Biogasanlage hohe Vergütungssätze für den produzierten Strom zusichert. Ohne diese staatliche Förderung wäre die Wirtschaftlichkeit von Biogasanlagen allerdings stark in Frage gestellt.

In der DE 203 19 847 U1 wird ein Großfermenter zur Erzeugung von Biogas aus Biomasse nach dem Prinzip der Feststoffmethanisierung offenbart.

Der Bericht "Biogas as vehicle fuel", Charlotte Plombin, Trendsetter, Stockholm, XP002374547, gibt einen Überblick über die Herstellung und Nutzung von Biogas in der EU.

Aufgabe vorliegender Erfindung ist es daher, eine alternative Nutzung von Biogas aufzuzeigen.

Erfindungsgemäß wird diese Aufgabe durch ein Verfahren gelöst, bei dem zumindest eines der in dem Biogas enthaltenen Gase Kohlendioxid und Methan in einem Prozess zur Wärmebehandlung von metallischen Werkstoffen eingesetzt wird.

Unter einer stofflichen Verwertung wird eine Verwertung verstanden, deren Hauptzweck auf die Nutzung der enthaltenen Stoffe gerichtet ist. Im Gegensatz dazu wird bei einer energetischen Nutzung im Wesentlichen auf eine Ausnutzung der in dem Biogas enthaltenen Energie abgehoben.

Die Erfindung setzt nun an einer stofflichen Nutzung des Biogases an. Die Zusammensetzung von Biogas ist variabel und hängt von den für die Fermentation eingesetzten Biomassen ab. Üblicherweise liegt bei Nassfermentern der Methangehalt zwischen 40 und 60 vol% und der CO₂-Gehalt bei 30 bis 40 vol%. Der Rest besteht im Wesentlichen aus Wasser. Bei Trockenfermentern ist der Wassergehalt niedriger und die Schwankungsbreite des Methan- und des Kohlendioxidgehalts ist geringer. So sind in Biogas aus einem Trockenfermenter Methan und Kohlendioxid in etwa gleichen Anteilen von jeweils 49 vol% enthalten.

Erfindungsgemäß wird nun dieses Biogas nicht energetisch verwertet, das heißt nicht zur Energiegewinnung verbrannt, sondern stofflich genutzt. Insbesondere werden das im Biogas enthaltene Methan und / oder Kohlendioxid als solche genutzt. Unter einer stofflichen Nutzung wird im Rahmen dieser Erfindung aber auch eine Nutzung verstanden, bei der das Biogas zunächst verbrannt wird, um die dabei entstehenden Reaktionsprodukte, insbesondere Kohlenstoff, verwerten zu können.

Erfindungsgemäß wird das Biogas oder zumindest ein Teil des Biogases in einem Prozess zur Wärmebehandlung von metallischen Werkstoffen eingesetzt.

Bei der Wärmebehandlung von metallischen Werkstoffen, insbesondere von Eisenbasiswerkstoffen, können die Eigenschaften des metallischen Werkstoffes durch eine Veränderung der Werkstoffzusammensetzung und/oder der Werkstoffstruktur beziehungsweise des Werkstoffgefüges gezielt verändert werden. Bei Aufkohlungsprozessen werden die Werkstoffe beispielsweise einer Atmosphäre ausgesetzt, die im Wesentlichen aus CO, H₂ und N₂ besteht.

Eine solche Atmosphäre wird üblicherweise durch unterstöchiometrische Verbrennung von Erdgas bereitgestellt, wobei teilweise das gebildete Wasser und das gebildete Kohlendioxid abgetrennt werden, bevor das Gasgemisch in den Wärmebehandlungsofen eingebracht wird. Der in dem Gasgemisch verbleibende Stickstoffanteil reduziert die Aufkohlungsgeschwindigkeit. In der Praxis werden Kohlenstoffübergangszahlen (beta-Werte) zwischen 1,6 und 1,65 mg/m³ erreicht. Höhere Aufkohlungsgeschwindigkeiten sind nur durch Eliminierung des Stickstoffs zu erzielen.

Die Erzeugung von aufkohlenden Gasgemischen erfolgt im Stand der Technik außer mit Endogasgeneratoren auch über die katalytische Umsetzung von Methanol oder Methan-Kohlendioxid-Stickstoff-Gemischen, wobei im heißen Bereich des Ofens ein CO-H₂-N₂-haltiges Gasgemisch entsteht. Ferner ist bekannt, Methan und Kohlendioxid vor Ort zu mischen und in H₂ und CO umzusetzen.

Fertige Gasgemische aus Methan und Kohlendioxid für den Einsatz in der Wärmebehandlung sind kommerziell nicht erhältlich. Dies liegt darin begründet, dass das Mischen der Gase unwirtschaftlicher ist als die oben beschriebene Herstellung des Gasgemisches mittels Endogasgeneratoren. Typische Wärmebehandlungsfirmen erwerben daher reine Gase, die über Gasmischanlagen und andere Anlagenkomponenten zu für die Wärmebehandlung geeigneten Gasgemischen gemischt werden.

Eine getrennte Eindüsung von CO und H₂ in einen Wärmebehandlungsofen erfüllt im Prinzip den gleichen Zweck, hat jedoch den Nachteil, dass CO als giftiges Gas bei der Lagerung und beim Transport sicherheitstechnisch große Probleme mit sich bringt.

Diese Nachteile werden durch die Erfindung vermieden, gemäß der Biogas für Wärmebehandlungsprozesse eingesetzt wird. Bei der Wärmebehandlung von metallischen Werkstoffen, insbesondere von Eisenbasiswerkstoffen, wird möglichst ein Gemisch aus gleichen Anteilen von CO₂ und CH₄ gewünscht. Biogas, insbesondere Biogas aus der Trockenfermentation, erfüllt diese Forderung nahezu ideal. Das Biogas wird vorzugsweise direkt über einen Katalysator in den Wärmebehandlungsofen eingebracht und katalytisch in CO und H₂ umgesetzt. Eine kostenaufwändige Mischung der Einsatzgase entfällt.

In einer besonders vorteilhaften Ausführungsform der Erfindung wird das Biogas oder zumindest das im Biogas enthaltene Methan einem Prozess zum Aufkohlen metallischer Werkstoffe zugeführt. Bei der katalytischen Umsetzung des Biogases in CO und H₂ entsteht theoretisch eine Aufkohlungsatmosphäre bestehend aus etwa 50% CO und 50% H₂ mit einem maximalen Betawert von 2,1 mg/m³, das heißt es wird eine Atmosphäre mit einer hohen Aufkohlungsgeschwindigkeit erzeugt.

Je nach Anwendungsgebiet kann es erforderlich sein, das Kohlendioxid und / oder das Methan von den restlichen Komponenten des Biogases abzutrennen und aus dem Biogas als - bezogen auf den Anwendungsfall - ausreichend reines Gas zu gewinnen. Die Abtrennung des Kohlendioxids erfolgt vorzugsweise durch Abkühlen des Biogases unter die Siedetemperatur von Kohlendioxid, so dass dieses in flüssiger Form abgezogen werden kann.

Bevorzugtes Einsatzgebiet der Erfindung sind Prozesse, bei denen sowohl Kohlendioxid als auch Methan benötigt werden. Ganz besonders bevorzugt sind hierbei Prozesse, bei denen diese beiden Gase zu etwa gleichen Teilen eingesetzt werden sollen. In diesen Fällen ist es günstig, dem Prozess das Biogas direkt zuzuführen. Da das Biogas zu mehr als 90 vol% aus Kohlendioxid und Methan besteht, stellt diese Anwendung eine besonders effiziente stoffliche Nutzung des Biogases dar.

Es hat sich auch als günstig erwiesen, das Biogas bei der Wärmebehandlung von Titan und / oder Titanlegierungen einzusetzen. Bei der Verbrennung von Biogas in einem Wärmebehandlungsofen entsteht eine Atmosphäre, die relativ wenig Wasser enthält. Durch den geringen Wassergehalt der Atmosphäre wird bei der Wärmebehandlung von Titan und / oder Titanlegierungen die Wasserstoffaufnahme dieser Werkstoffe minimiert. Die sonst übliche Verbrennung von Erdgas zur Erzeugung einer Wärmebehandlungsatmosphäre führt zu viel zu hohen Wasserstoffgehalten in Titan, so dass dieses beispielsweise in der Luftfahrtindustrie nicht mehr eingesetzt werden darf.

Biogas lässt sich weiterhin mit Vorteil als Grundstoff bei der Herstellung von Kunststoffen, Ethylen oder Methanol einsetzen.

Bei der Trockenfermentation ist die Abhängigkeit der CO₂- und CH₄-Anteile von der Art der vergärten Biomasse besonders gering. Außerdem sind beide Gase in hohen Konzentrationen von etwa 49 vol% im Biogas enthalten. Die relativ stabile Zusammensetzung von Biogas aus Trockenfermentern macht dieses für viele Prozesse besonders attraktiv.

Von Vorteil wird das Biogas vor Ort in unmittelbarer Nähe zu einer Biogas oder einen der Bestandteile des Biogases verbrauchenden Industrieanlage hergestellt. Durch den Einsatz von solchen On-Site-Biogasanlagen werden die Kosten für den Transport des Biogases oder des aus dem Biogas gewonnenen Kohlendioxids minimiert.

Andererseits kann Biogas auch auf höhere Drücke verdichtet werden, wodurch eine Speicherung des Biogases möglich und sinnvoll wird. In einer bevorzugten Ausführungsvariante der Erfindung wird daher das Biogas zunächst verdichtet und in einem Speicherbehälter gelagert, bevor es seiner Verwendung zugeführt wird. Besonders bevorzugt wird das Biogas vor der Komprimierung getrocknet, das heißt von Wasser beziehungsweise Wasserdampf befreit. In komprimierter Form kann das Biogas leicht zu potentiellen Verbrauchern transportiert und dort genutzt werden. Vorzugsweise wird das Biogas auf einen Druck von 10 bis 60 bar, besonders bevorzugt 20 bis 50 bar, komprimiert.

Die Erfindung weist zahlreiche Vorteile gegenüber dem Stand der Technik auf. So eröffnet die stoffliche Nutzung des Biogases der Biogasbranche neue Märkte und macht diese von staatlichen Subventionen unabhängig. Die Zukunftsaussichten der Biogasindustrie werden beträchtlich verbessert.

Unternehmen, die das Biogas beziehungsweise das im Biogas enthaltene Kohlendioxid stofflich nutzen, werden von Erdöl- und Erdgasimporten unabhängig, da Biogas dezentral aus organischen Rückständen erzeugt werden kann.
Besondere Vorteile ergeben sich beim Einsatz von Biogas in der Wärmebehandlung metallischer Werkstücke. Solche Wärmebehandlungsprozesse verbrauchen keine fossilen Brennstoffe und besitzen eine hohe Umweltverträglichkeit. Auch werden die Kosten für die Wärmebehandlung vom Erdgaspreis abgekoppelt. Insbesondere beim Einsatz von Biogas als Ausgangsstoff zur katalytischen Herstellung einer Aufkohlungsatmosphäre bringt die Erfindung aufgrund des hohen Betawertes der Aufkohlungsatmosphäre Vorteile.

## Patentansprüche

1. Verfahren zur Nutzung von Biogas, wobei das Biogas stofflich verwertet wird, **dadurch gekennzeichnet, dass** zumindest eines der in dem Biogas enthaltenen Gase Kohlendioxid und Methan in einem Prozess zur Wärmebehandlung von metallischen Werkstoffen eingesetzt wird.

2. Verfahren nach Anspruch 1, **dadurch gekennzeichnet, dass** das Biogas getrocknet, komprimiert, gespeichert und anschließend stofflich verwertet wird.

3. Verfahren nach Anspruch 2, **dadurch gekennzeichnet, dass** das Biogas auf einen Druck von 10 bis 60 bar, vorzugsweise 20 bis 50 bar, komprimiert wird.

4. Verfahren nach einem der Ansprüche 1 bis 3, **dadurch gekennzeichnet, dass** das Biogas durch Trockenfermentation gewonnen wird.

5. Verfahren nach einem der Ansprüche 1 bis 4, **dadurch gekennzeichnet, dass** die in dem Biogas enthaltenen Gase Kohlendioxid und Methan voneinander getrennt werden und dass zumindest eines der Gase stofflich genutzt wird.

6. Verfahren nach einem der Ansprüche 1 bis 5, **dadurch gekennzeichnet, dass** die in dem Biogas enthaltenen Gase Kohlendioxid und Methan in demselben Prozess stofflich verwertet werden.

7. Verfahren nach einem der Ansprüche 1 bis 6, **dadurch gekennzeichnet, dass** zumindest eines der in dem Biogas enthaltenen Gase Kohlendioxid und Methan in einem Prozess zum Aufkohlen von metallischen Werkstücken eingesetzt wird.

8. Verfahren nach einem der Ansprüche 1 bis 7, **dadurch gekennzeichnet, dass** das Biogas in unmittelbarer Nähe einer das Biogas stofflich verwertenden Anlage erzeugt wird.

9. Verfahren nach einem der Ansprüche 1 bis 8, **dadurch gekennzeichnet, dass** das Biogas in einem Prozess zur Wärmebehandlung von Titan und / oder Titanlegierungen eingesetzt wird.

## Claims

1. Method of using biogas, wherein the biogas is utilized as material, **characterized in that** at least one of the gases carbon dioxide and methane contained in the biogas is used in a process for the heat treatment of metallic materials.

2. Method according to Claim 1, **characterized in that** the biogas is dried, compressed, stored, and subsequently utilized as material.

3. Method according to Claim 2, **characterized in that** the biogas is compressed to a pressure of 10 to 60 bar, preferably 20 to 50 bar.

4. Method according to any of Claims 1 to 3, **characterized in that** the biogas is obtained by dry fermentation.

5. Method according to any of Claims 1 to 4, **characterized in that** the gases carbon dioxide and methane contained in the biogas are separated from one another and that at least one of the gases is used as material.

6. Method according to any of Claims 1 to 5, **characterized in that** the gases carbon dioxide and methane contained in the biogas are utilized as material in the same process.

7. Method according to any of Claims 1 to 6, **characterized in that** at least one of the gases carbon dioxide and methane contained in the biogas is used in a process for carburizing metallic materials.

8. Method according to any of Claims 1 to 7, **characterized in that** the biogas is generated in the immediate vicinity of a plant utilizing the biogas as material.

9. Method according to any of Claims 1 to 8, **characterized in that** the biogas is used in a process for the heat treatment of titanium and/or titanium alloys.

## Revendications

1. Procédé d'utilisation de biogaz, le biogaz étant recyclé, **caractérisé en ce qu'**au moins l'un des gaz dioxyde de carbone et méthane contenus dans le biogaz est utilisé dans un processus de traitement thermique de matériaux métalliques.

2. Procédé selon la revendication 1, **caractérisé en ce que** le biogaz est séché, comprimé, alimenté et ensuite recyclé.

3. Procédé selon la revendication 2, **caractérisé en ce que** le biogaz est comprimé à une pression de 10 à 60 bars, de préférence de 20 à 50 bars.

4. Procédé selon l'une quelconque des revendications 1 à 3, **caractérisé en ce que** le biogaz est obtenu par fermentation à sec.

5. Procédé selon l'une quelconque des revendications 1 à 4, **caractérisé en ce que** les gaz dioxyde de carbone et méthane contenus dans le biogaz sont séparés et **en ce qu'**au moins l'un des gaz est recyclé.

6. Procédé selon l'une quelconque des revendications 1 à 5, **caractérisé en ce que** les gaz dioxyde de carbone et méthane contenus dans le biogaz sont recyclés dans le même processus.

7. Procédé selon l'une quelconque des revendications 1 à 6, **caractérisé en ce qu'**au moins l'un des gaz dioxyde de carbone et méthane contenus dans le biogaz est utilisé dans un processus de carburation de matériaux métalliques.

8. Procédé selon l'une quelconque des revendications 1 à 7, **caractérisé en ce que** le biogaz est produit à proximité immédiate d'une installation recyclant le biogaz.

9. Procédé selon l'une quelconque des revendications 1 à 8, **caractérisé en ce que** le biogaz est utilisé dans un processus de traitement thermique de titane et/ou d'alliages de titane.
